# EUROPEAN PATENT SPECIFICATION

(11) **EP 3 119 071 B1**
(45) Date of publication and mention of the grant of the patent: **01.08.2018**
(21) Application number: 15762144.2
(22) Date of filing: 09.03.2015
(51) Int. Cl.: H04M 11/00, H04Q 9/00, G08C 17/00, G08C 23/04

(54) **DEVICE CONTROL APPARATUS AND DEVICE CONTROL METHOD**
VORRICHTUNGSSTEUERUNGSEINRICHTUNG UND VORRICHTUNGSSTEUERUNGSVERFAHREN
APPAREIL ET PROCÉDÉ DE COMMANDE DE DISPOSITIF

(30) Priority: 10.03.2014 JP 2014045886; 05.02.2015 JP 2015021643
(43) Date of publication of application: 18.01.2017
(73) Proprietor: Panasonic Intellectual Property Management Co., Ltd., Osaka 540-6207 (JP)
(72) Inventor: SATO, Kazuki, Osaka-shi, Osaka 540-6207 (JP)
(74) Representative: Grünecker Patent- und Rechtsanwälte PartG mbB
(86) International application number: PCT/JP2015/001256
(87) International publication number: WO 2015/136906

(56) References cited:
- JP-A- 2000 244 987
- JP-A- 2002 369 266
- JP-A- 2013 009 033
- US-A1- 2006 121 863

## Description

### TECHNICAL FIELD

The present disclosure relates to apparatus controllers and apparatus control methods for controlling in-home apparatuses.

### BACKGROUND ART

Patent Literature 1 discloses an apparatus controller that preferentially executes content of control instructed by a user in a location near a controlled apparatus to reduce a possibility that the control content be changed by another person while a function of the controlled apparatus is enjoyed.

### Citation List

### Patent Literature

PTL 1: Unexamined Japanese Patent Publication No. 2013-9033

US 2006/0121863 A1 discloses a device control for controlling a device with a high-priority signal without interference by a low-priority signal. Panel keys, which serve as a high-priority signal receiver unit, receives a high-priority signal. A panel key signal processing unit, which is a high-priority signal processing unit, processes the signal received by the panel keys. A remote control signal receiver unit, which is a low-priority signal receiver unit, receives a low-priority signal. A remote control signal processing unit, which is a low-priority signal processing unit, processes the signal received by the remote control signal receiver unit. A remote control signal reception control unit, which is a low-priority signal processing control unit, disables the processing in the remote control signal processing unit when the panel key signal processing unit is performing the processing.

### SUMMARY OF THE INVENTION

An apparatus controller of the present disclosure is an apparatus controller for controlling an in-home apparatus, and includes a control unit for receiving first control information from a first operating device and controlling the apparatus according to the first control information, and a storage unit for storing the first control information for a predetermined time period after a start of first control according to the first control information, in which (i) when the control unit further receives second control information from a second operating device lower in priority than the first operating device within the predetermined time period for which the first control information is stored in the storage unit, the control unit does not control the apparatus according to the second control information, and (ii) when the control unit further receives the second control information from the second operating device after the predetermined time period, the control unit controls the apparatus according to the second control information.

An apparatus control method of the present disclosure is an apparatus control method for controlling an in-home apparatus, and includes receiving first control information from a first operating device and controlling the apparatus according to the first control information, and (i) after a start of first control according to the first control information, when receiving second control information from a second operating device lower in priority than the first operating device within a predetermined time period for which the first control information is stored in a storage unit, not controlling the apparatus according to the second control information, and (ii) when receiving the second control information from the second operating device after the predetermined time period, controlling the apparatus according to the second control information.

### BRIEF DESCRIPTION OF DRAWINGS

FIG. 1 is a block diagram of a remote control system according to a first exemplary embodiment.
FIG. 2 is a block diagram of an apparatus controller according to the first exemplary embodiment.
FIG. 3 is a diagram for explaining a control history recorded in a storage unit according to the first exemplary embodiment.
FIG. 4 is a flowchart showing an operation of the remote control system according to the first exemplary embodiment.
FIG. 5 is a diagram for explaining a control sequence example of the remote control system according to the first exemplary embodiment.
FIG. 6 is a diagram for explaining a control sequence example of the remote control system according to the first exemplary embodiment.
FIG. 7 is a diagram for explaining a control sequence example of the remote control system according to the first exemplary embodiment.
FIG. 8 is a diagram for explaining a control sequence example of the remote control system according to the first exemplary embodiment.
FIG. 9 is a diagram for explaining a control sequence example of the remote control system according to the first exemplary embodiment.

### DESCRIPTION OF EMBODIMENTS

Hereinafter, exemplary embodiments will be described in detail with reference to the drawings as appropriate. However, unnecessarily detailed description may be omitted. For example, detailed description of well-known matters and redundant description of substantially identical configurations may be omitted. This is to prevent the following description from being unnecessarily redundant to facilitate understanding of those skilled in the art.

The inventor(s) provides the accompanying drawings and the following description for those skilled in the art to fully understand the present disclosure, and does not intend to limit a subject described in the claims by them.

In the following description, in order to clearly distinguish elements in expression, ordinal numbers such as first, second, and third are added, depending on examples. These ordinal numbers may be changed, omitted, or newly added as appropriate.

### FIRST EXEMPLARY EMBODIMENT

### [1-1. Configuration]

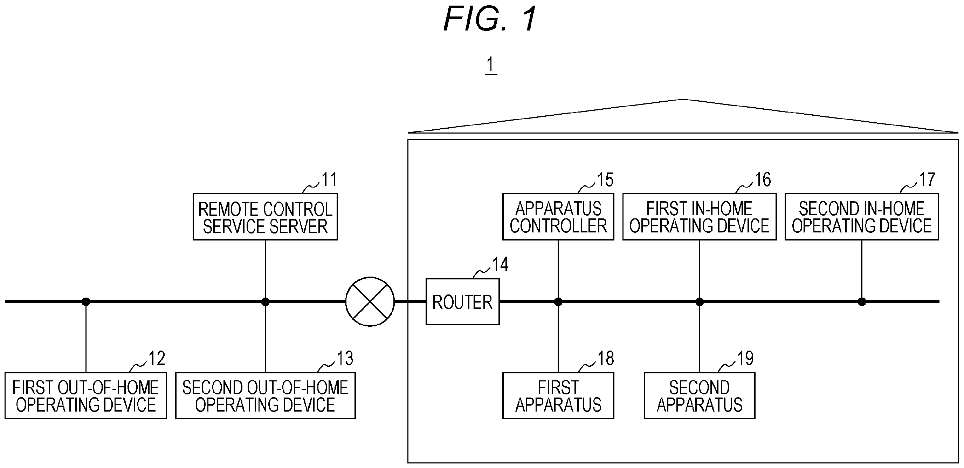

FIG. 1 is a block diagram of a remote control system according to a first exemplary embodiment.

Remote control system 1 includes remote control service server 11, first out-of-home operating device 12, second out-of-home operating device 13, router 14, apparatus controller 15, first in-home operating device 16, second in-home operating device 17, first apparatus 18, and second apparatus 19.

Remote control service server 11, first out-of-home operating device 12, and second out-of-home operating device 13 are disposed outside a home and interconnected by an external network. Router 14, apparatus controller 15, first in-home operating device 16, second in-home operating device 17, first apparatus 18, and second apparatus 19 are disposed in the home and interconnected by an internal network.

The external network is the Internet, for example, and the internal network is a wireless LAN (Local Area Network), for example. The in-home and out-of-home devices, the in-home apparatuses, and out-of-home remote control service server 11 are interconnected via the external network, the internal network, and router 14.

In remote control system 1, first out-of-home operating device 12 and second out-of-home operating device 13 (collectively, also referred to as out-of-home operating devices) access apparatus controller 15 via remote control service server 11. Then, the out-of-home operating devices control in-home first apparatus 18 and second apparatus 19 (collectively, also referred to as apparatuses) via remote control service server 11 and apparatus controller 15.

In remote control system 1, first in-home operating device 16 and second in-home operating device 17 (collectively, also referred to as in-home operating devices) access apparatus controller 15. Then, the in-home operating devices control the in-home apparatuses via apparatus controller 15. The out-of-home operating devices and the in-home operating devices are also collectively referred to as operating devices. The in-home apparatuses are also referred to simply as apparatuses.

When remote control service server 11 is accessed from an out-of-home operating device via the external network, remote control service server 11 transmits a control menu for remotely controlling the apparatuses to the out-of-home operating device, using a web server function of its own. The control menu is displayed on the out-of-home operating device to control an apparatus. A user selects an apparatus to be remotely controlled and a control instruction on the control menu. That is, the out-of-home operating device selects an apparatus to be remotely controlled and a control instruction, according to the user's operation.

Remote control service server 11 transmits control information to apparatus controller 15 via the external network and router 14, the control information including the selected apparatus, the selected control instruction, and a name or identification ID of the out-of-home operating device that has selected them.

The out-of-home operating devices are smartphones or tablet computers, for example. The out-of-home operating devices access remote control service server 11 to remotely control the apparatuses, according to the users' operation. Then, the out-of-home operating devices select an apparatus to be remotely controlled and a control instruction on the control menu for controlling the apparatuses received from remote control service server 11, according to the users' operation.

The out-of-home operating devices transmit control information to remote control service server 11, the control information including the selected apparatus, the selected control instruction, and a device name or identification ID of their own. Although two out-of-home operating devices, first out-of-home operating device 12 and second out-of-home operating device 13, are illustrated in FIG. 1, the number of out-of-home operating devices is not limited to this, and may be one or three or more.

Router 14 relays control information transmitted by the out-of-home operating devices to apparatus controller 15 via remote control service server 11. Router 14 also relays control information transmitted by the in-home operating devices to apparatus controller 15. Router 14 also relays control instructions transmitted by apparatus controller 15 to the apparatuses. Control instructions are included in control information transmitted by the operating devices to apparatus controller 15.

Apparatus controller 15 is a controller for controlling the apparatuses. Specifically, apparatus controller 15 controls the apparatuses, using control information transmitted from the operating devices. After starting control of an apparatus according to control information transmitted from an operating device, apparatus controller 15 stores the control information for a predetermined time period, for example, 30 seconds, and after a lapse of the predetermined time period, deletes the control information.

When apparatus controller 15 newly receives control information from an operating device while the control information is stored, apparatus controller 15 determines whether or not to perform control of the apparatus according to the new control information, based on priorities of the operating devices described below.

The in-home operating devices are tablet computers or smartphones, for example. The in-home operating devices select an apparatus to be remotely controlled and a control instruction on the control menu for remotely controlling the apparatuses, according to users' operation. The in-home operating devices transmit control information to apparatus controller 15 via router 14, the control information including the selected apparatus, the selected control instruction, and a device name or identification ID of their own. Although two in-home operating devices, first in-home operating device 16 and second in-home operating device 17, are illustrated in FIG. 1, the number of in-home operating devices is not limited to this, and may be one or three or more.

The apparatuses are in-home controlled devices such as an air conditioner and an electronic shutter. The apparatuses operate, according to control instructions transmitted from apparatus controller 15 via router 14.

Here, "in-home" means "in the same home," and represents an area where the internal network can be used for connection, for example. "Out of home" represents an area other than "in-home" and is an area where the external network is used for connection. For example, when a device in a different facility is connected to an in-home apparatus or the like via the external network, the device in the different facility is an out-of-home device. Even a device in a facility shown in FIG. 1 is treated as an out-of-home device when the device is connected to an in-home apparatus or the like via the external network.

For example, when an in-home operating device is connectable to the external network, and is connected to an in-home apparatus or the like via the external network, the in-home operating device is treated as an out-of-home operating device.

When receiving control information via remote control service server 11, apparatus controller 15 may identify a source of the control information as an out-of-home operating device. When receiving control information without remote control service server 11, apparatus controller 15 may identify a source of the control information as an in-home operating device. Alternatively, by referring to control information, apparatus controller 15 may identify an operating device serving as a source of the control information from among first out-of-home operating device 12, second out-of-home operating device 13, first in-home operating device 16, and second in-home operating device 17.

The predetermined time period (period) for which control information is stored is basically different from a time period for which an apparatus is controlled. For example, the predetermined time period is determined independently of a time period from the start to the end of control. More specifically, for example, the predetermine time period is a fixed time period such as 30 seconds from the start of control.

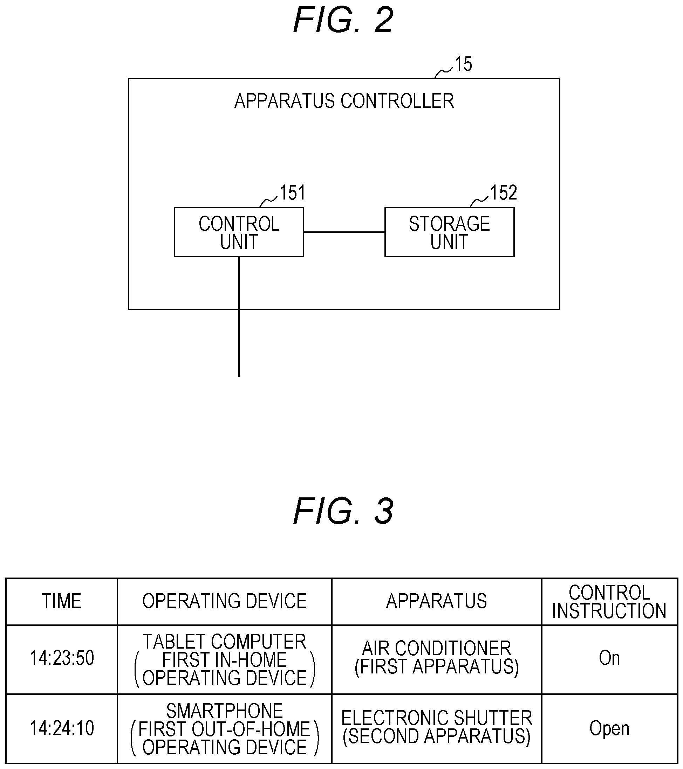

FIG. 2 is a block diagram of apparatus controller 15 shown in FIG. 1.

Apparatus controller 15 includes control unit 151 and storage unit 152.

Control unit 151 controls the apparatuses, using control information transmitted from the operating devices. After starting control of an apparatus according to control information transmitted from an operating device, control unit 151 stores the control information for the predetermined time period, for example, 30 seconds, in storage unit 152, and after a lapse of the predetermined time period, deletes the control information from storage unit 152. When newly receiving control information from an operating device while the control information is stored in storage unit 152, control unit 151 determines whether or not to perform control of the apparatus according to the new control information, based on priorities of the operating devices.

After the start of control using control information from an operating device, storage unit 152 stores the control information for the predetermined time period, for example, 30 seconds, according to control performed by control unit 151. Specifically, as described above, control unit 151 stores the control information in storage unit 152. Storage unit 152 deletes the control information after a lapse of the predetermined time period, according to control performed by control unit 151. Specifically, as described above, control unit 151 deletes the control information from storage unit 152.

FIG. 3 is a diagram for explaining a control history stored in storage unit 152 shown in FIG. 2.

Control unit 151 transmits a control instruction from an operating device to an apparatus. After the start of control of the apparatus, control unit 151 receives a response of control success from the apparatus. Control unit 151 stores, in storage unit 152, a set of information in which control information including information on the operating device, information on the apparatus, and information on the control instruction is added to information on a time at which the response is received. FIG. 3 shows a state where two sets of information are stored in storage unit 152 as a control history.

Specifically, in an example in FIG. 3, storage unit 152 stores the following. That is, a tablet computer, first in-home operating device 16, has transmitted a control instruction of power "On" to an air conditioner, in-home first apparatus 18. After control of power "On" on the air conditioner has been started, control unit 151 has received a response of power "On" success from the air conditioner at 14:23:50.

After control unit 151 has received the response of power "On" success from the air conditioner, storage unit 152 stores the control information for the predetermined time period, for example, 30 seconds.

The control history stored in storage unit 152 is a history of an apparatus control start by control unit 151. In storage unit 152, information may be stored before a response of control success is received from an apparatus. In this case, control unit 151 stores, in storage unit 152, a set of information in which control information including information on an operating device, information on an apparatus, and information on a control instruction is added to information on a time at which the control instruction is transmitted to the apparatus.

### [1-2. Operation]

An operation of remote control system 1 configured as above will be described below.

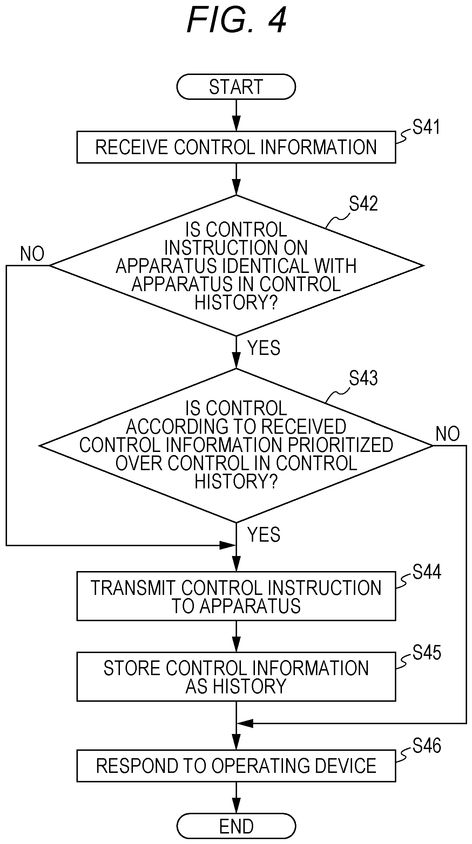

FIG. 4 is a flowchart showing an operation of remote control system 1 shown in FIG. 1. In particular, FIG. 4 shows an operation of control unit 151 of apparatus controller 15.

First, control unit 151 receives control information from an operating device (S41).

Next, control unit 151 determines whether or not an apparatus to be controlled according to the received control information is identical with an apparatus controlled according to control information stored in storage unit 152 (S42). In the following description of the flowchart, for convenience, control information stored in storage unit 152 is also referred to as first control information, and received control information is also referred to as second control information. An operating device that has transmitted the first control information is also referred to as a first operating device, and an operating device that has transmitted the second control information is also referred to as a second operating device.

When the apparatus to be controlled with the second control information is identical with the apparatus controlled with the first control information (Yes in S42), control unit 151 determines whether or not to perform control of the apparatus with the second control information (S43). At that time, based on a priory of the first operating device and a priority of the second operating device, control unit 151 determines whether or not to perform the control of the apparatus.

When the priority of the second operating device is higher than or equal to the priory of the first operating device (Yes in S43), control unit 151 transmits a control instruction included in the second control information to the apparatus (S44). After the start of the control of the apparatus, control unit 151 receives a response of control success from the apparatus, and stores the second control information together with a time at which the response is received, in storage unit 152 (S45).

Then, control unit 151 notifies the second operating device of the control success of the apparatus (S46).

On the other hand, when the apparatus to be controlled with the second control information is not identical with the apparatus controlled with the first control information (No in S42), control unit 151 transmits a control instruction included in the second control information to the apparatus to be controlled with the second control information (S44). The subsequent operation is as already described.

When the priority of the second operating device is lower than the priory of the first operating device (No in S43), control unit 151 does not transmit a control instruction included in the second control information to the apparatus to be controlled with the second control information, and notifies the second operating device accordingly (S46).

As described above, when the apparatus to be controlled with the second control information is identical with the apparatus controlled with the first control information (Yes in S42), control unit 151 determines whether or not the priority of the second operating device is higher than the priory of the first operating device (S43). A relationship between the priory of the first operating device and the priority of the second operating device is as follows.

When the second operating device is an operating device different from the first operating device and is an out-of-home operating device, control unit 151 determines that the priority of the second operating device is lower than the priory of the first operating device (No in S43). In other words, control unit 151 identifies an operating device that is different from the first operating device and is an out-of-home operating device as an operating device lower in priority than the first operating device.

When the first operating device is an out-of-home operating device, and the second operating device is an in-home operating device, control unit 151 determines that the priority of the second operating device is higher than the priory of the first operating device (Yes in S43). In other words, when the first operating device is an out-of-home operating device, control unit 151 identifies an in-home operating device as an operating device higher in priority than the first operating device.

When the first operating device is an in-home operating device, and the second operating device is an in-home operating device, control unit 151 determines whether or not a priority predetermined for the second operating device is higher than a priory predetermined for the first operating device (S43) .

In other words, when the first operating device is an in-home operating device, control unit 151 identifies an operating device that is a different in-home operating device and has a lower predetermined priority than that of the first operating device as an operating device lower in priority than the first operating device. When the first operating device is an in-home operating device, control unit 151 identifies an operating device that is a different in-home operating device and has a higher predetermined priority than that of the first operating device as an operating device higher in priority than the first operating device.

When the second operating device is an operating device identical with the first operating device, that is, when a source of the second control information is identical with a source of the first control information, control unit 151 determines that the priority of the second operating device is equal to the priority of the first operating device (Yes in S43). In other words, control unit 151 identifies an operating device identical with the first operating device as an operating device equal in priority to the first operating device.

In the operation shown in FIG. 4, when the priority of the second operating device is equal to the priority of the first operating device, control according to the second control information is performed as in the case where the priority of the second operating device is higher than the priority of the first operating device. Thus, when the priority of the second operating device is equal to the priority of the first operating device, new control is prioritized over current control. This operation is an example. When the priority of the second operating device that is different from the first operating device is equal to the priority of the first operating device, current control may be prioritized not to perform control according to the second control information.

When control unit 151 performs control according to the second control information in a case where control according to the first control information is being performed, control unit 151 stops the control according to the first control information. When control unit 151 does not perform control according to the second control information in a case where control according to the first control information is being performed, control unit 151 continues the control according to the first control information.

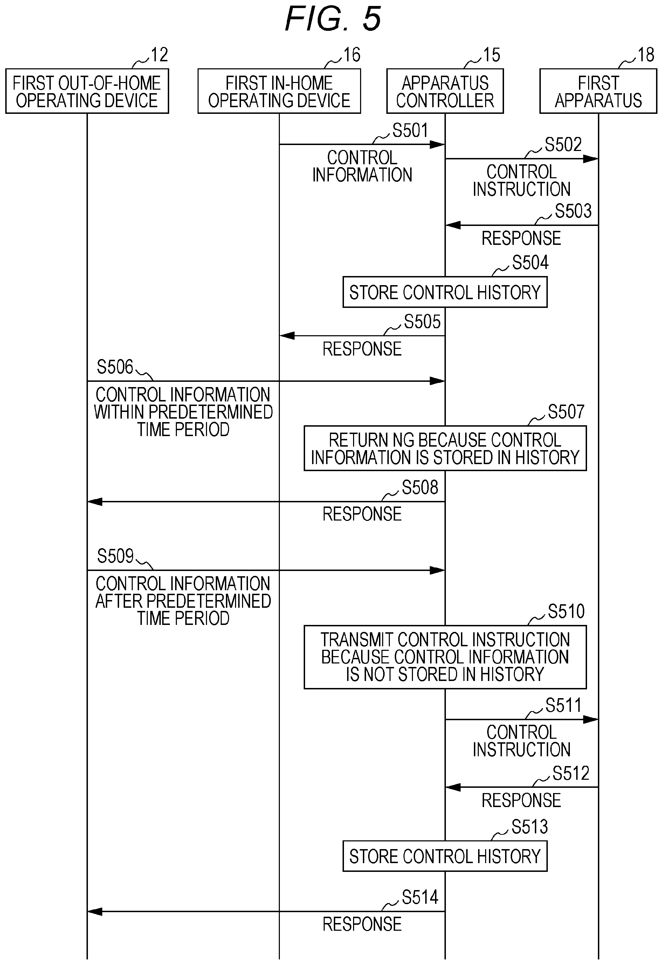

Hereinafter, examples of control sequences of remote control system 1 will be described with reference to FIGS. 5 to 9.

FIGS. 5 to 9 are diagrams for explaining control sequence examples of remote control system 1 shown in FIG. 1. In the following description of the diagrams, for convenience, control information transmitted first to apparatus controller 15 is also referred to as first control information, control information transmitted after the first control information is also referred to as second control information, and control information transmitted after the second control information is also referred to as third control information.

First, an example in FIG. 5 will be described. In the example in FIG. 5, first in-home operating device 16 transmits first control information for controlling first apparatus 18 to apparatus controller 15 (S501). Apparatus controller 15 transmits a control instruction included in the first control information to first apparatus 18 to control first apparatus 18 (S502). When control is started, first apparatus 18 responds to apparatus controller 15 with a control result (here control success) (S503).

Apparatus controller 15 receives the response from first apparatus 18, and stores that time together with the first control information (S504). Apparatus controller 15 notifies first in-home operating device 16 of the response from first apparatus 18 (S505).

Next, first out-of-home operating device 12 transmits second control information for controlling first apparatus 18 to apparatus controller 15 within a predetermined time period from a point in time when the first control information is stored (S506). Apparatus controller 15 receives the second control information within the predetermined time period from the point in time when the first control information is stored.

In this example, first apparatus 18 to be controlled with first out-of-home operating device 12 is identical with first apparatus 18 controlled with first in-home operating device 16. First out-of-home operating device 12 is an operating device different from first in-home operating device 16 that has transmitted the first control information, and is an out-of-home operating device.

Therefore, apparatus controller 15 does not perform control of first apparatus 18 according to the second control information. Apparatus controller 15 notifies first out-of-home operating device 12 accordingly (S507, S508).

Next, after the predetermined time period from the point in time when the first control information is stored, first out-of-home operating device 12 transmits third control information for controlling first apparatus 18 to apparatus controller 15 (S509). Apparatus controller 15 receives the third control information after the predetermined time period from the point in time when the first control information is stored.

After the predetermined time period, the first control information has been deleted from a history and is not stored. Therefore, apparatus controller 15 performs control of first apparatus 18 according to the third control information. Specifically, apparatus controller 15 transmits a control instruction included in the third control information to first apparatus 18 to control first apparatus 18 (S510, S511).

When the control is started, first apparatus 18 responds to apparatus controller 15 with a control result (here control success) (S512). Apparatus controller 15 receives the response from first apparatus 18, and stores that time together with the third control information (S513). Apparatus controller 15 notifies first out-of-home operating device 12 of the response from first apparatus 18 (S514).

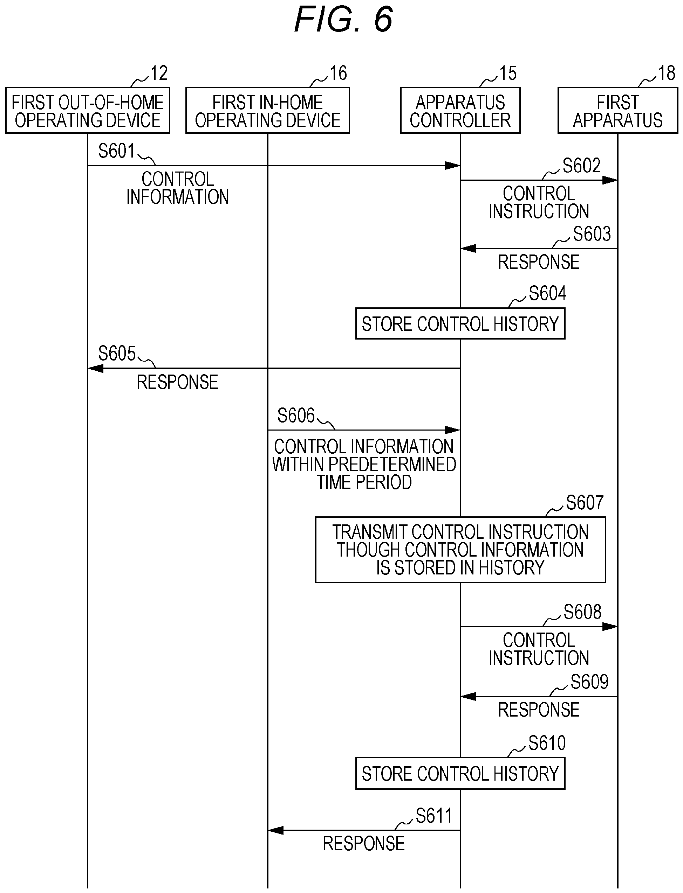

Next, an example in FIG. 6 will be described. In the example in FIG. 6, first out-of-home operating device 12 transmits first control information for controlling first apparatus 18 to apparatus controller 15 (S601). Apparatus controller 15 transmits a control instruction included in the first control information to first apparatus 18 to control first apparatus 18 (S602). When the control is started, first apparatus 18 responds to apparatus controller 15 with a control result (here control success) (S603).

Apparatus controller 15 receives the response from first apparatus 18, and stores that time together with the first control information (S604). Apparatus controller 15 notifies first out-of-home operating device 12 of the response from first apparatus 18 (S605).

Next, first in-home operating device 16 transmits second control information for controlling first apparatus 18 to apparatus controller 15 within a predetermined time period from a point in time when the first control information is stored (S606). Apparatus controller 15 receives the second control information within the predetermined time period from the point in time when the first control information is stored.

In this example, first apparatus 18 to be controlled with first in-home operating device 16 is identical with first apparatus 18 controlled with first out-of-home operating device 12. However, first out-of-home operating device 12 that has transmitted the first control information is an out-of-home operating device, and first in-home operating device 16 that has transmitted the second control information is an in-home operating device.

Therefore, apparatus controller 15 performs control of first apparatus 18 according to the second control information. Apparatus controller 15 transmits a control instruction included in the second control information to first apparatus 18 to control first apparatus 18 (S607, S608).

When the control is started, first apparatus 18 responds to apparatus controller 15 with a control result (here control success) (S609). Apparatus controller 15 receives the response from first apparatus 18, and stores that time together with the second control information (S610). Apparatus controller 15 notifies first in-home operating device 16 of the response from first apparatus 18 (S611).

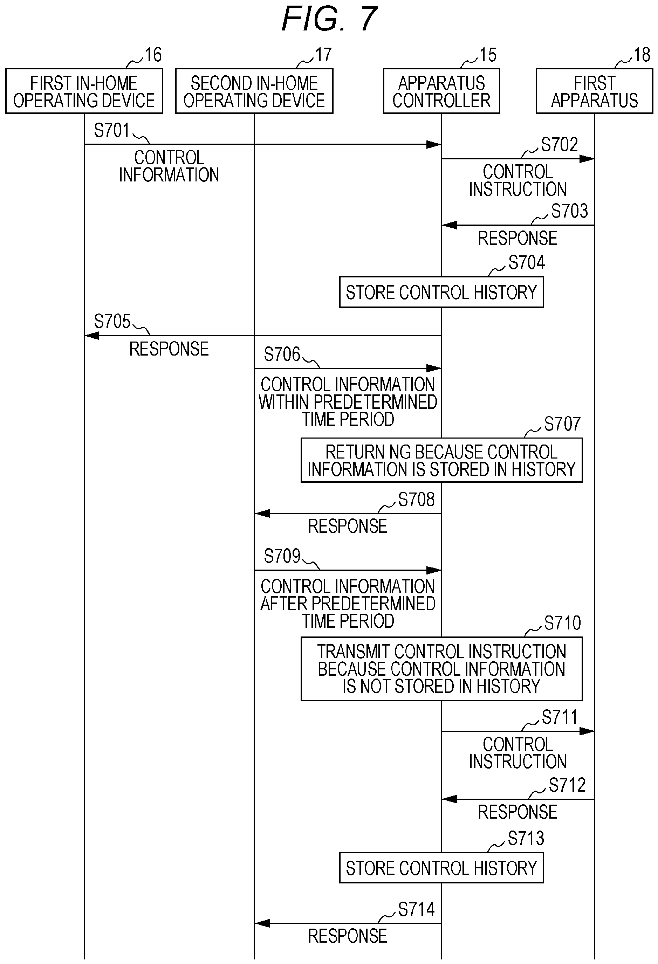

Next, an example in FIG. 7 will be described. In the example in FIG. 7, a priority predetermined for first in-home operating device 16 is higher than a priority predetermined for second in-home operating device 17. First in-home operating device 16 transmits first control information for controlling first apparatus 18 to apparatus controller 15 (S701). Apparatus controller 15 transmits a control instruction included in the first control information to first apparatus 18 to control first apparatus 18 (S702). When the control is started, first apparatus 18 responds to apparatus controller 15 with a control result (here control success) (S703).

Apparatus controller 15 receives the response from first apparatus 18, and stores that time together with the first control information (S704). Apparatus controller 15 notifies first in-home operating device 16 of the response from first apparatus 18 (S705).

Next, second in-home operating device 17 transmits second control information for controlling first apparatus 18 to apparatus controller 15 within a predetermined time period from a point in time when the first control information is stored (S706). Apparatus controller 15 receives the second control information within the predetermined time period from the point in time when the first control information is stored.

In this example, first apparatus 18 to be controlled with second in-home operating device 17 is identical with first apparatus 18 controlled with first in-home operating device 16. First in-home operating device 16 and second in-home operating device 17 are each an in-home operating device. The predetermined priority of second in-home operating device 17 is lower than the predetermined priority of first in-home operating device 16.

Therefore, apparatus controller 15 does not perform control of first apparatus 18 according to the second control information. Control unit 151 notifies second in-home operating device 17 accordingly (S707, S708).

Next, after the predetermined time period from the point in time when the first control information is stored, second in-home operating device 17 transmits third control information for controlling first apparatus 18 to apparatus controller 15 (S709). Apparatus controller 15 receives the third control information after the predetermined time period from the point in time when the first control information is stored.

After the predetermined time period, the first control information has been deleted from a history, and is not stored. Therefore, apparatus controller 15 performs control of first apparatus 18 according to the third control information. Specifically, apparatus controller 15 transmits a control instruction included in the third control information to first apparatus 18 to control first apparatus 18 (S710, S711).

When the control is started, first apparatus 18 responds to apparatus controller 15 with a control result (here control success) (S712). Apparatus controller 15 receives the response from first apparatus 18, and stores that time together with the third control information (S713). Apparatus controller 15 notifies second in-home operating device 17 of the response from first apparatus 18 (S714).

In the example in FIG. 7, when the priority predetermined for first in-home operating device 16 is lower than the priority predetermined for second in-home operating device 17, apparatus controller 15 performs control according to the second control information received within the predetermined time period from second in-home operating device 17.

The priority predetermined for first in-home operating device 16 and the priority predetermined for second in-home operating device 17 may be registered in advance in apparatus controller 15. More specifically, for example, these predetermined priorities may be stored in storage unit 152 of apparatus controller 15.

For example, there is a case where first in-home operating device 16 is an operating device attached to first apparatus 18, and second in-home operating device 17 is an operating device not attached to first apparatus 18. In this case, it may be defined that the predetermined priority of first in-home operating device 16 be higher than the predetermined priority of second in-home operating device 17.

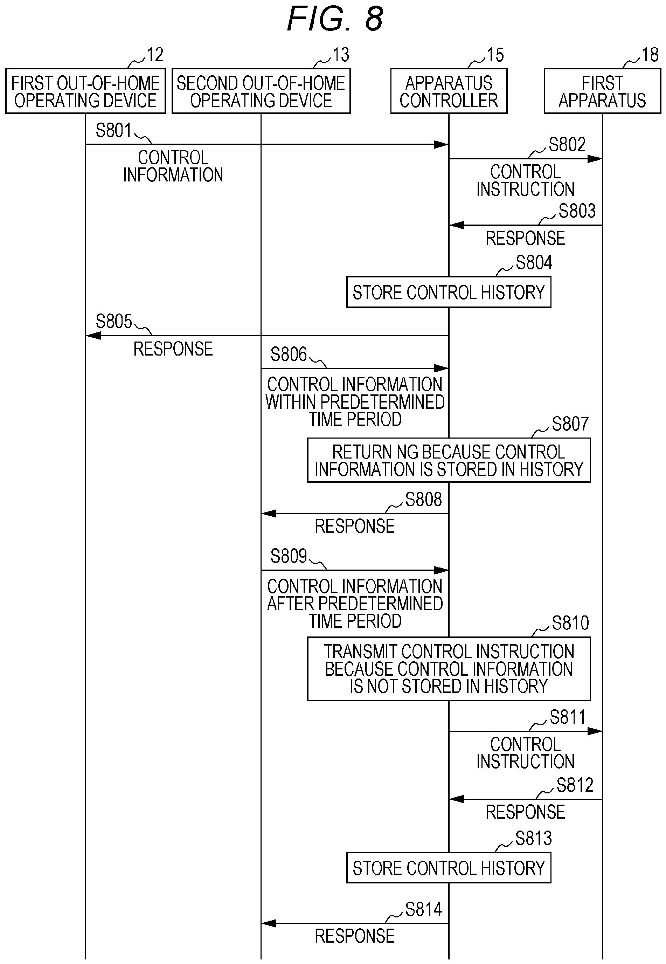

Next, an example in FIG. 8 will be described. In the example in FIG. 8, first out-of-home operating device 12 transmits first control information for controlling first apparatus 18 to apparatus controller 15 (S801). Apparatus controller 15 transmits a control instruction included in the first control information to first apparatus 18 to control first apparatus 18 (S802). When the control is started, first apparatus 18 responds to apparatus controller 15 with a control result (here control success) (S803).

Apparatus controller 15 receives the response from first apparatus 18, and stores that time together with the first control information (S804). Apparatus controller 15 notifies first out-of-home operating device 12 of the response from first apparatus 18 (S805).

Next, second out-of-home operating device 13 transmits second control information for controlling first apparatus 18 to apparatus controller 15 within a predetermined time period from a point in time when the first control information is stored (S806). Apparatus controller 15 receives the second control information within the predetermined time period from the point in time when the first control information is stored.

In this example, first apparatus 18 to be controlled with second out-of-home operating device 13 is identical with first apparatus 18 controlled with first out-of-home operating device 12. Second out-of-home operating device 13 that has transmitted the second control information is an operating device different from first out-of-home operating device 12 that has transmitted the first control information, and is an out-of-home operating device.

Therefore, apparatus controller 15 does not perform control of first apparatus 18 according to the second control information from second out-of-home operating device 13. Apparatus controller 15 notifies second out-of-home operating device 13 accordingly (S807, S808).

Next, after the predetermined time period from the point in time when the first control information is stored, second out-of-home operating device 13 transmits third control information for controlling first apparatus 18 to apparatus controller 15 (S809). Apparatus controller 15 receives the third control information after the predetermined time period from the point in time when the first control information is stored.

After the predetermined time period, the first control information has been deleted from a history, and is not stored. Therefore, apparatus controller 15 performs control of first apparatus 18 according to the third control information. Specifically, apparatus controller 15 transmits a control instruction included in the third control information to first apparatus 18 to control first apparatus 18 (S810, S811).

When the control is started, first apparatus 18 responds to apparatus controller 15 with a control result (here control success) (S812). Apparatus controller 15 receives the response from first apparatus 18, and stores that time together with the third control information (S813). Apparatus controller 15 notifies second out-of-home operating device 13 of the response from first apparatus 18 (S814).

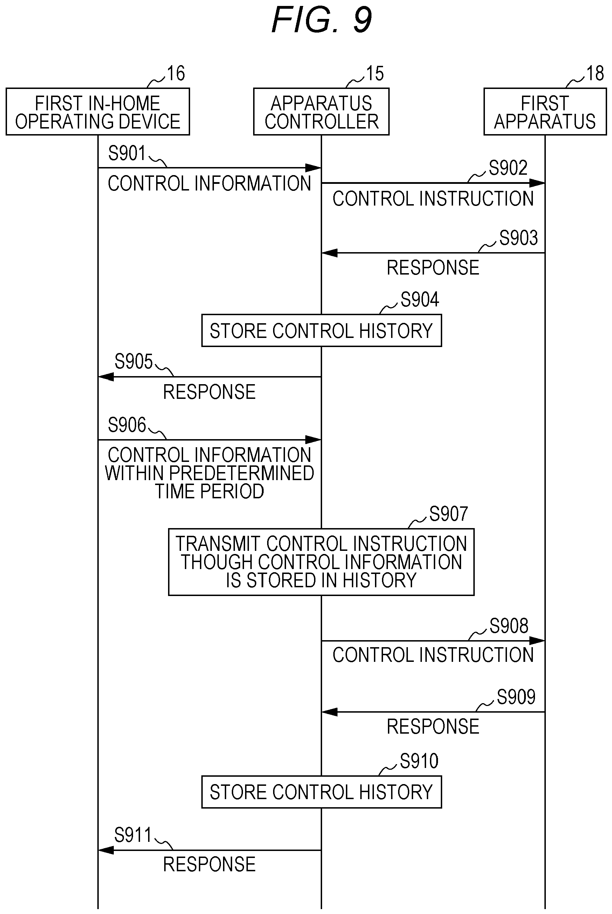

Next, an example in FIG. 9 will be described. In the example in FIG. 9, first in-home operating device 16 transmits first control information for controlling first apparatus 18 to apparatus controller 15 (S901). Apparatus controller 15 transmits a control instruction included in the first control information to first apparatus 18 to control first apparatus 18 (S902).

When the control is started, first apparatus 18 responds to apparatus controller 15 with a control result (here control success) (S903). Apparatus controller 15 receives the response from first apparatus 18, and stores that time together with the first control information (S904). Apparatus controller 15 notifies first in-home operating device 16 of the response from first apparatus 18 (S905).

Next, first in-home operating device 16 transmits second control information for controlling first apparatus 18 to apparatus controller 15 within a predetermined time period from a point in time when the first control information is stored (S906). Apparatus controller 15 receives the second control information within the predetermined time period from the point in time when the first control information is stored.

In this example, identical first in-home operating device 16 controls first apparatus 18. Therefore, apparatus controller 15 performs control of first apparatus 18 according to the second control information. Specifically, apparatus controller 15 transmits a control instruction included in the second control information to first apparatus 18 to control first apparatus 18 (S907, S908). When the control is started, first apparatus 18 responds to apparatus controller 15 with a control result (here control success) (S909).

Apparatus controller 15 receives the response from first apparatus 18, and stores that time together with the second control information (S910). At this time, apparatus controller 15 deletes the first control information that has been stored in storage unit 152. Apparatus controller 15 notifies first in-home operating device 16 of the response from first apparatus 18 (S911).

As described above, ordinal numbers such as first, second, and third are added to identify elements clearly in expression. These ordinal numbers may be changed, omitted, or newly added as appropriate.

Specifically, control information that is for controlling an apparatus and is control information first transmitted to apparatus controller 15 may be expressed as first control information, and an operating device that has transmitted the first control information may be expressed as a first operating device. An operating device lower in priority than the first operating device may be expressed as a second operating device, and control information that is for controlling the apparatus and is control information transmitted from the second operating device may be expressed as second control information.

For example, when control unit 151 of apparatus controller 15 receives second control information from a second operating device lower in priority than a first operating device within a predetermined time period for which first control information is stored in storage unit 152 of apparatus controller 15, control unit 151 does not control an apparatus according to the second control information. After the predetermined time period, when control unit 151 receives the second control information from the second operating device lower in priority than the first operating device, control unit 151 controls the apparatus according to the second control information.

For example, when control unit 151 receives second control information from a second operating device lower in priority than a first operating device before completion of control according to first control information within a predetermined time period for which the first control information is stored, control unit 151 does not perform control according to the second control information, and continues the control according to the first control information. After the predetermined time period, when control unit 151 receives the second control information from the second operating device lower in priority than the first operating device before completion of the control according to first control information, control unit 151 stops the control according to first control information, and performs the control according to the second control information.

An operating device higher in priority than the first operating device may be expressed as a third operating device, and control information that is for controlling an apparatus and is control information transmitted from the third operating device may be expressed as third control information. For example, when control unit 151 receives the third control information from the third operating device higher in priority than the first operating device within a predetermined time period for which the first control information is stored, control unit 151 controls an apparatus according to the third control information.

An operating device equal in priority to the first operating device may be expressed as a fourth operating device, and control information that is for controlling an apparatus and is control information transmitted from the fourth operating device may be expressed as fourth control information. For example, when control unit 151 receives the fourth control information from the fourth operating device equal in priority to the first operating device within a predetermined time period for which the first control information is stored, control unit 151 controls an apparatus according to the fourth control information.

Control information that is for controlling an apparatus and is control information newly transmitted from the first operating device may be expressed as fifth control information. For example, when control unit 151 receives the fifth control information from the first operating device within a predetermined time period for which the first control information is stored, control unit 151 controls an apparatus according to the fifth control information.

Control information for controlling a different in-home apparatus may be expressed as sixth control information. For example, when control unit 151 receives the sixth control information for controlling a different in-home apparatus from the second operating device lower in priority than the first operating device within a predetermined time period for which the first control information is stored, control unit 151 controls the apparatus according to the sixth control information.

### [1-3. Effects and Others]

As above, in the first exemplary embodiment, apparatus controller 15 controls in-home apparatuses. Apparatus controller 15 includes control unit 151 and storage unit 152.

Control unit 151 receives first control information from a first operating device, and controls an apparatus according to the first control information. Storage unit 152 is a storage unit for storing first control information for a predetermined time period after first control according to the first control information is started.

When control unit 151 receives second control information from a second operating device lower in priority than the first operating device within the predetermined time period for which the first control information is stored in storage unit 152, control unit 151 does not control the apparatus according to the second control information. When receiving the second control information from the second operating device after the predetermined time period, control unit 151 controls the apparatus according to the second control information.

Thus, apparatus controller 15 can appropriately control an in-home apparatus, according to control information received from a lower-priority operating device. For example, a state created by a higher-priority operating device is maintained within a predetermined time period. Further, for example, a lower-priority operating device can change control after the predetermined time period. Therefore, control can be flexibly changed.

Control of an apparatus may be performed continuously for a long time period. For example, in control of an air conditioner or the like, control to maintain the air conditioner at a predetermined set temperature may be performed continuously for a long time period. Even when such control is performed by a higher-priority operating device, after a predetermined time period, apparatus controller 15 can change the control, according to control information received from a lower-priority operating device.

On the other hand, control of an apparatus may be completed instantaneously, and the apparatus may be opened from the control in a short time period. For example, it is assumed that control of switching between ON and OFF of power of various apparatuses is completed instantaneously. When such control is performed by a higher-priority operating device, apparatus controller 15 can restrict change of a state of an apparatus by a lower-priority operating device within a predetermined time period to maintain the state of the apparatus controlled by the higher-priority operating device.

For example, the above-described predetermined time period is different from a time period until completion of first control. Specifically, for example, the above-described predetermined time period is a time period determined independently of a time period until completion of first control. More specifically, for example, the predetermined time period is a predetermined fixed time period such as 30 seconds from the start of first control. This allows a lower-priority operating device to control an apparatus after a predetermined time period without waiting for completion of first control. Alternatively, for example, after completion of first control, a state created by first control is maintained within a predetermined time period.

For example, when control unit 151 receives second control information from a second operating device before completion of first control within a predetermined time period, control unit 151 continues the first control. When receiving the second control information from the second operating device before completion of the first control after the predetermined time period, control unit 151 stops the first control.

Thus, a lower-priority operating device can control an apparatus appropriately without waiting for completion of first control.

For example, when control unit 151 receives third control information from a third operating device higher in priority than a first operating device within a predetermined time period, control unit 151 controls an apparatus according to the third control information.

Thus, a higher-priority operating device can control an apparatus via apparatus controller 15 within a predetermined time period.

For example, when control unit 151 receives fourth control information from a fourth operating device equal in priority to a first operating device within a predetermined time period, control unit 151 controls an apparatus according to the fourth control information.

Thus, an operating device equal in priority to an operating device that has controlled an apparatus before can control the apparatus via apparatus controller 15 within a predetermined time period.

For example, when control unit 151 receives fourth control information from a fourth operating device equal in priority to a first operating device within a predetermined time period, control unit 151 does not control an apparatus according to the fourth control information. When receiving the fourth control information from the fourth operating device after the predetermined time period, control unit 151 controls the apparatus according to the fourth control information.

Thus, an operating device equal in priority to an operating device that has controlled an apparatus before can control the apparatus via apparatus controller 15 after a predetermined time period.

For example, when control unit 151 receives fifth control information from a first operating device within a predetermined time period, control unit 151 controls an apparatus according to the fifth control information.

Thus, an operating device identical with an operating device that has controlled an apparatus before can control the apparatus via apparatus controller 15 within a predetermined time period.

For example, control unit 151 identifies an out-of-home operating device that is an operating device different from a first operating device, as a second operating device lower in priority than the first operating device.

Thus, apparatus controller 15 can restrict control from an out-of-home operating device within a predetermined time period.

For example, when a first operating device is an in-home operating device, control unit 151 identifies an operating device that is a different in-home operating device and has a lower predetermined priority than that of the first operating device, as a second operating device lower in priority than the first operating device.

Thus, apparatus controller 15 can restrict control from an in-home operating device within a predetermined time period.

For example, when a first operating device is an out-of-home operating device, control unit 151 identifies an in-home operating device as a third operating device higher in priority than the first operating device.

Thus, apparatus controller 15 can prioritize control from an in-home operating device over control from an out-of-home operating device.

For example, when a first operating device is an in-home operating device, control unit 151 identifies an operating device that is a different in-home operating device and has a higher predetermined priority than that of the first operating device, as a third operating device higher in priority than the first operating device.

Thus, apparatus controller 15 can prioritize control from an operating device having a higher predetermined priority, of a plurality of in-home operating devices.

For example, when control unit 151 receives sixth control information for controlling a different in-home apparatus from a second operating device within a predetermined time period, control unit 151 controls the different apparatus according to the sixth control information.

Thus, apparatus controller 15 can control a different apparatus that has not been controlled according to control information received from a higher-priority first operating device, according to control information received from a lower-priority second operating device.

For example, control unit 151 may delete first control information stored in storage unit 152 from storage unit 152 after a predetermined time period. Alternatively, control unit 151 may invalidate first control information stored in storage unit 152 without deleting the first control information from storage unit 152 after a predetermined time period. Alternatively, control unit 151 may determine whether first control information is invalid or not, based on whether or not a predetermined time period has elapsed since the start of first control. When the first control information is invalid, control unit 151 may control an apparatus according to second control information.

For example, first control information stored in storage unit 152 does not need to completely agree with first control information received from a first operating device. When first control information is stored in storage unit 152, the first control information may be changed in format, other information may be added, or part of the information may be changed or deleted, as appropriate.

The above-described predetermined time period may be equal to a time period until completion of first control. Alternatively, the predetermined time period may be a time period depending on a time period until completion of first control. For example, the predetermined time period may be a time period including a certain time period from completion of first control. Alternatively, the predetermined time period after the start of control may be a predetermined time period after completion of control.

The configuration of apparatus controller 15 shown in the first exemplary embodiment may be expressed as follows.

For example, in the first exemplary embodiment, apparatus controller 15 controls apparatuses based on control information transmitted from a plurality of operating devices. Apparatus controller 15 includes storage unit 152 and control unit 151. Storage unit 152 stores first control information for a predetermined time period after the start of control of an apparatus based on the first control information.

Control unit 151 newly receives second control information while the first control information is stored. When apparatuses controlled with the first control information and the second control information are identical, control unit 151 determines whether or not to perform control of the apparatus according to the second control information. At that time, control unit 151 determines whether or not to perform control of the apparatus according to the second control information, based on a priority of an operating device that has transmitted the first control information (first operating device) and a priority of an operating device that has transmitted the second control information (second operating device).

Thus, when an identical in-home apparatus is controlled from a plurality of operating devices within a predetermined time period, apparatus controller 15 can appropriately control the apparatus by a higher-priority operating device.

For example, when a second operating device is an operating device different from a first operating device and is an out-of-home operating device, control unit 151 does not perform control of an apparatus according to second control information.

Thus, when a first user in a home or out of the home controls an apparatus with an in-home or out-of-home first operating device, and thereafter, a different second user out of the home tries to control the apparatus with a different out-of-home second operating device within a predetermined time period, the control according to the first user's operation is maintained. Therefore, apparatus controller 15 can prevent an operation not intended by the first user from being performed on the apparatus.

For example, when a first operating device is an out-of-home operating device, and a second operating device is an in-home operating device, control unit 151 performs control of an apparatus according to second control information.

Thus, when a first user out of a home controls an apparatus with an out-of-home first operating device, and thereafter, a second user in the home tries to change the control of the apparatus with an in-home second operating device within a predetermined time period, the control of the apparatus is changed by the operation by the second user in the home. Therefore, apparatus controller 15 can change an operation of the apparatus to the operation intended by the second user in the home.

For example, when a first operating device is an in-home operating device, and a second operating device is a different in-home operating device, control unit 151 determines whether or not to perform control of an apparatus according to second control information, based on priorities predetermined for the first operating device and the second operating device.

Thus, when a plurality of users in a home operate an apparatus from a plurality of in-home operating devices, individually, within a predetermined time period, apparatus controller 15 can control the apparatus to operate as intended by a user holding an operating device of the highest priority.

For example, when a second operating device (source of second control information) is identical with a first operating device (source of first control information), control unit 151 performs control of an apparatus according to the second operating device.

Thus, an identical operating device can continuously control an identical in-home apparatus within a predetermined time period.

### OTHER EXEMPLARY EMBODIMENTS

In the first exemplary embodiment, control unit 151 determines whether or not an apparatus to be controlled with received second control information is identical with an apparatus controlled with first control information stored in storage unit 152.

When the apparatus to be controlled with the received second control information is identical with the apparatus controlled with the first control information stored in storage unit 152 (Yes in S42), control unit 151 determines whether or not a priority of a second operating device is higher than a priority of a first operating device. Specifically, control unit 151 determines whether or not the second operating device that has transmitted the received second control information is higher in priority than the first operating device that has transmitted the first control information stored in storage unit 152 (S43).

Alternatively, apparatus controller 15 may compare priorities of control instructions included in respective control information pieces from a plurality of operating devices, with others, or may compare priorities of network types used when control instructions are transmitted from operating devices to apparatus controller 15, with others. For example, apparatus controller 15 may prioritize control information transmitted using infrared radiation over control information transmitted using other networks.

In the first exemplary embodiment, as shown in FIG. 1, apparatus controller 15, first apparatus 18, and second apparatus 19 are configured as separate bodies. Each of first apparatus 18 and second apparatus 19, and apparatus controller 15 may be configured as one body. That is, first apparatus 18 or second apparatus 19 may include apparatus controller 15.

In the above description, 30 seconds are cited as an example of a predetermined time period. In order to maintain control performed by a higher-priority operating device, a longer time period may be used as a predetermined time period. For example, 5 minutes, 30 minutes, or an hour may be used.

Apparatus controller 15 may selectively include a plurality of components in the present disclosure. The apparatus control method may selectively include a plurality of processing steps in the present disclosure.

Components in the present disclosure may be circuits. These circuits may constitute a single circuit as a whole, or may be separate circuits. These circuits may each be a general-purpose circuit or a dedicated circuit.

Processing steps in the present disclosure may be executed by a computer. For example, a computer executes a program using hardware resources such as a processor (CPU), memory, and an input/output circuit, thereby executing processing steps in the present disclosure. Specifically, a processor acquires data to be processed from memory, an input/output circuit, or the like to perform an operation on the data, and outputs an operation result to the memory, the input/output circuit, or the like, thereby executing the processing steps.

A program to execute the processing steps in the present disclosure may be recorded in a non-temporary recording medium such as a computer-readable CD-ROM or the like. In this case, the computer reads the program from the non-temporary recording medium and executes the program, thereby executing the processing steps.

As above, the exemplary embodiments have been described as illustrative examples of a technology in the present disclosure. For that, the accompanying drawings and the detailed description have been provided.

Therefore, the components described in the accompanying drawings and the detailed description may include not only components essential to solve the problem but also components inessential to solve the problem to illustrate the above implementation. Thus, those inessential components should not be recognized as essential directly because those inessential components are described in the accompanying drawings and the detail description.

Since the above-described exemplary embodiments are intended to illustrate the technology in the present disclosure, various changes, replacements, additions, and omissions may be made within the scope of the claims or the scope of the equivalence.

### INDUSTRIAL APPLICABILITY

The present disclosure is useful as a control technology for controlling in-home apparatuses based on control information transmitted from operating devices, and is applicable to in-home apparatus controllers, remote controllers, in-home apparatus control systems, remote control systems, and the like.

### REFERENCE MARKS IN THE DRAWINGS

- 1: remote control system
- 11: remote control service server
- 12: first out-of-home operating device
- 13: second out-of-home operating device
- 14: router
- 15: apparatus controller
- 16: first in-home operating device
- 17: second in-home operating device
- 18: first apparatus
- 19: second apparatus
- 151: control unit
- 152: storage unit

## Claims

1. An apparatus controller (15) for controlling an in-home apparatus (18, 19), comprising:
a control unit (151) adapted to receive first control information from a first operating device (12, 13, 16, 17) and to control the in-home apparatus (18, 19) according to the first control information; and
a storage unit (152) adapted to store the first control information for a predetermined time period after a start of first control according to the first control information, wherein
(i) when the control unit (151) is adapted to further receive a second control information from a second operating device (12, 13, 16, 17) lower in priority than the first operating device (12, 13, 16, 17) within the predetermined time period for which the first control information is stored in the storage unit (152), the control unit (151) is further adapted not to control the in-home apparatus (18, 19) according to the second control information, and
(ii) when the control unit (151) is adapted to further receive the second control information from the second operating device (12, 13, 16, 17) after the predetermined time period, the control unit (151) is further adapted to control the in-home apparatus (18, 19) according to the second control information.

2. The apparatus controller (15) according to claim 1, wherein the predetermined time period is different from a time period until completion of the first control.

3. The apparatus controller (15) according to claim 1 or 2, wherein (i) when the control unit (151) is adapted to further receive the second control information from the second operating device (12, 13, 16, 17) before completion of the first control within the predetermined time period, the control unit (151) is further adapted to continue the first control, and (ii) when the control unit (151) is adapted to further receive the second control information from the second operating device (12, 13, 16, 17) before completion of the first control after the predetermined time period, the control unit (151) is further adapted to stop the first control.

4. The apparatus controller (15) according to any one of claims 1 to 3, wherein when the control unit (151) is adapted to further receive third control information from a third operating device (12, 13, 16, 17) higher in priority than the first operating device (12, 13, 16, 17) within the predetermined time period, the control unit (151) is further adapted to control the in-home apparatus according to the third control information.

5. The apparatus controller (15) according to any one of claims 1 to 4, wherein when the control unit (151) is adapted to further receive fourth control information from a fourth operating device (12, 13, 16, 17) equal in priority to the first operating device (12, 13, 16, 17) within the predetermined time period, the control unit (151) is further adapted to control the in-home apparatus according to the fourth control information.

6. The apparatus controller (15) according to any one of claims 1 to 4, wherein when the control unit (151) is adapted to further receive fourth control information from a fourth operating device (12, 13, 16, 17) equal in priority to the first operating device (12, 13, 16, 17) within the predetermined time period, the control unit (151) is further adapted to not control the in-home apparatus according to the fourth control information, and when the control unit (151) is adapted to further receive the fourth control information from the fourth operating device (12, 13, 16, 17) after the predetermined time period, the control unit (151) is further adapted to control the in-home apparatus according to the fourth control information.

7. The apparatus controller (15) according to any one of claims 1 to 6, wherein when the control unit (151) is adapted to further receive fifth control information from the first operating device (12, 13, 16, 17) within the predetermined time period, the control unit (151) is further adapted to control the in-home apparatus according to the fifth control information.

8. The apparatus controller (15) according to any one of claims 1 to 7, wherein the control unit (151) is further adapted to identify an operating device that is different from the first operating device (12, 13, 16, 17) and is an out-of-home operating device as the second operating device (12, 13, 16, 17) lower in priority than the first operating device.

9. The apparatus controller (15) according to any one of claims 1 to 8, wherein, when the first operating device (12, 13, 16, 17) is an in-home operating device, the control unit (151) is further adapted to identify a different in-home operating device that is an operating device having a lower predetermined priority than a predetermined priority of the first operating device (12, 13, 16, 17) as the second operating device (12, 13, 16, 17) lower in priority than the first operating device (12, 13, 16, 17).

10. The apparatus controller (15) according to claim 4, wherein, when the first operating device (12, 13, 16, 17) is an out-of-home operating device, the control unit (151) is further adapted to identify an in-home operating device as the third operating device higher in priority than the first operating device (12, 13, 16, 17).

11. The apparatus controller (15) according to claim 4 or 10, wherein, when the first operating device (12, 13, 16, 17) is an in-home operating device, the control unit (151) is further adapted to identify a different in-home operating device that is an operating device having a higher predetermined priority than a predetermined priority of the first operating device (12, 13, 16, 17) as the third operating device higher in priority than the first operating device (12, 13, 16, 17).

12. The apparatus controller (15) according to any one of claims 1 to 11, wherein when the control unit (151) is adapted to further receive sixth control information for controlling a different in-home apparatus from the second operating device (12, 13, 16, 17) within the predetermined time period, the control unit (151) is further adapted to control the different apparatus according to the sixth control information.

13. An apparatus control method for controlling an in-home apparatus, the method comprising the steps of:
receiving, by a control unit, first control information from a first operating device and controlling, by the control unit, the in-home apparatus according to the first control information;
storing, by a storing unit, the first control information for a predetermined time period after a start of first control according to the first control information; and
(i) after a start of first control according to the first control information, when receiving second control information from a second operating device lower in priority than the first operating device within a predetermined time period for which the first control information is stored in a storage unit, not controlling the in-home apparatus according to the second control information, and
(ii) when receiving the second control information from the second operating device after the predetermined time period, controlling the in-home apparatus according to the second control information.

## Patentansprüche

1. Gerätesteuereinheit (15) zum Steuern eines In-Haus-Gerätes (18, 19), umfassend:
eine Steuereinheit (151), die dazu eingerichtet ist, erste Steuerinformationen von einer ersten Bedienvorrichtung (12, 13, 16, 17) zu empfangen und das In-Haus-Gerät (18, 19) gemäß den ersten Steuerinformationen zu steuern; und
eine Speichereinheit (152), die dazu eingerichtet ist, erste Steuerinformationen für eine vorbestimmte Zeitdauer nach einem Start der ersten Steuerung gemäß den ersten Steuerinformationen zu speichern, wobei
(i) wenn die Steuereinheit (151) dazu eingerichtet ist, weiter zweite Steuerinformationen von einer zweiten Bedienvorrichtung (12, 13, 16, 17), die in der Priorität niedriger ist als die erste Bedienvorrichtung (12, 13, 16, 17), innerhalb der vorbestimmten Zeitspanne zu empfangen, für die die ersten Steuerinformationen in der Speichereinheit (152) gespeichert sind, die Steuereinheit (151) weiterhin dazu eingerichtet ist, das In-Haus-Gerät (18, 19) gemäß den zweiten Steuerinformationen nicht zu steuern, und
(ii) wenn die Steuereinheit (151) dazu eingerichtet ist, die zweiten Steuerinformationen von der zweiten Bedienvorrichtung (12, 13, 16, 17) nach der vorbestimmten Zeitperiode weiter zu empfangen, die Steuereinheit (151) ferner dazu eingerichtet ist, das In-Haus-Gerät (18, 19) gemäß den zweiten Steuerinformationen zu steuern.

2. Gerätesteuereinheit (15) nach Anspruch 1, bei der sich die vorbestimmte Zeitspanne von einer Zeitspanne bis zur Beendigung der ersten Steuerung unterscheidet.

3. Gerätesteuereinheit (15) nach Anspruch 1 oder 2, bei der (i) wenn die Steuereinheit (151) dazu eingerichtet ist, die zweiten Steuerinformationen von der zweiten Bedienvorrichtung (12, 13, 16, 17), bevor die erste Steuerung abgeschlossen ist, innerhalb der vorbestimmten Zeitperiode weiter zu empfangen, die Steuereinheit (151) weiterhin dazu eingerichtet ist, die erste Steuerung fortzusetzen, und (ii), wenn die Steuereinheit (151) dazu eingerichtet ist, die zweiten Steuerinformationen von der zweiten Bedienvorrichtung (12, 13, 16, 17) vor Abschluss der ersten Steuerung nach der vorbestimmten Zeitdauer weiter zu empfangen, die Steuereinheit (151) weiter dazu eingerichtet ist, die erste Steuerung anzuhalten.

4. Gerätesteuereinheit (15) nach einem der Ansprüche 1 bis 3, bei der, wenn die Steuereinheit (151) dazu eingerichtet ist, weiter dritte Steuerinformationen von einer dritten Bedienvorrichtung (12, 13, 16, 17), die in der Priorität höher ist als die erste Bedienvorrichtung (12, 13, 16, 17), innerhalb der vorbestimmten Zeitdauer weiter zu empfangen, die Steuereinheit (151) weiterhin dazu eingerichtet ist, das In-Haus-Gerät gemäß den dritten Steuerinformationen zu steuern.

5. Gerätesteuereinheit (15) nach einem der Ansprüche 1 bis 4, bei der, wenn die Steuereinheit (151) dazu eingerichtet ist, vierte Steuerinformationen von einer vierten Bedienvorrichtung (12, 13, 16, 17), die dieselbe Priorität wie die erste Bedienvorrichtung (12, 13, 16, 17) hat, innerhalb der vorbestimmten Zeitperiode weiter zu empfangen, die Steuereinheit (151) weiterhin dazu eingerichtet ist, das In-Haus-Gerät gemäß den vierten Steuerinformationen zu steuern.

6. Gerätesteuereinheit (15) nach einem der Ansprüche 1 bis 4, bei der, wenn die Steuereinheit (151) dazu eingerichtet ist, vierte Steuerinformationen von einer vierten Bedienvorrichtung (12, 13, 16, 17), die dieselbe Priorität wie die der ersten Bedienvorrichtung (12, 13, 16, 17) hat, innerhalb der vorbestimmten Zeitspanne weiter zu empfangen, die Steuereinheit (151) weiterhin dazu eingerichtet ist, das In-Haus-Gerät gemäß den vierten Steuerinformationen nicht zu steuern, und wenn die Steuereinheit (151) dazu eingerichtet ist, die vierten Steuerinformationen von der vierten Bedienvorrichtung (12, 13, 16, 17) nach der vorbestimmten Zeitperiode weiter zu empfangen, die Steuereinheit (151) weiterhin dazu eingerichtet ist, das In-Haus-Gerät gemäß den vierten Steuerinformationen zu steuern.

7. Gerätesteuereinheit (15) nach einem der Ansprüche 1 bis 6, bei der, wenn die Steuereinheit (151) dazu eingerichtet ist, weiterhin fünfte Steuerinformationen von der ersten Bedienvorrichtung (12, 13, 16, 17) innerhalb der vorbestimmten Zeitperiode zu empfangen, die Steuereinheit (151) weiterhin dazu eingerichtet ist, das In-Haus-Gerät gemäß den fünften Steuerinformationen zu steuern.

8. Gerätesteuereinheit (15) nach einem der Ansprüche 1 bis 7, bei der die Steuereinheit (151) ferner dazu eingerichtet ist, eine Bedienvorrichtung zu identifizieren, die sich von der ersten Bedienvorrichtung (12, 13, 16, 17) unterscheidet, und eine Außer-Haus-Bedienvorrichtung als die zweite Bedienvorrichtung (12, 13, 16, 17) ist, die eine niedrigere Priorität als die erste Bedienvorrichtung hat.

9. Gerätesteuereinheit (15) nach einem der Ansprüche 1 bis 8, bei der, wenn die erste Bedienvorrichtung (12, 13, 16, 17) eine In-Haus-Bedienvorrichtung ist, die Steuereinheit (151) weiterhin zur Erkennung einer anderen In-Haus-Bedienvorrichtung, die eine Bedienvorrichtung mit einer niedrigeren vorgegebenen Priorität als eine vorgegebene Priorität der ersten Bedienvorrichtung (12, 13, 16, 17) ist, als zweite Bedienvorrichtung (12, 13, 16, 17) eingerichtet ist, die eine niedrigere Priorität als die erste Bedienvorrichtung (12, 13, 16, 17) hat.

10. Gerätesteuereinheit (15) nach Anspruch 4, bei der, wenn die erste Bedienvorrichtung (12, 13, 16, 17) eine Außer-Haus-Bedienvorrichtung ist, die Steuereinheit (151) weiterhin dazu eingerichtet ist, eine In-Home-Bedienvorrichtung als die dritte Bedienvorrichtung zu identifizieren, die eine höhere Priorität als die erste Bedienvorrichtung (12, 13, 16, 17) aufweist.

11. Gerätesteuereinheit (15) nach Anspruch 4 oder 10, bei der, wenn die erste Bedienvorrichtung (12, 13, 16, 17) eine In-Haus-Bedienvorrichtung ist, die Steuereinheit (151) ferner dazu eingerichtet ist, eine andere In-Haus-Bedienvorrichtung, die eine Bedienvorrichtung mit einer höheren vorbestimmten Priorität als eine vorbestimmte Priorität der ersten Bedienvorrichtung (12, 13, 16, 17) ist, als dritte Bedienvorrichtung mit höherer Priorität als die erste Bedienvorrichtung (12 , 13, 16, 17) zu identifizieren.

12. Gerätesteuereinheit (15) nach einem der Ansprüche 1 bis 11, wobei, wenn die Steuereinheit (151) dazu eingerichtet ist, weiterhin sechste Steuerinformationen zum Steuern eines anderen In-Haus-Gerätes von der zweiten Bedienvorrichtung (12, 13, 16, 17) innerhalb der vorbestimmten Zeitspanne zu empfangen, die Steuereinheit (151) ferner dazu eingerichtet ist, die andere Vorrichtung gemäß der sechsten Steuerinformationen zu steuern.

13. Vorrichtungssteuerverfahren zum Steuern eines In-Haus-Gerätes, wobei das Verfahren die folgenden Schritte umfasst:
Empfangen erster Steuerinformationen von einer ersten Betriebsvorrichtung durch eine Steuereinheit und Steuern des In-Haus-Gerätes gemäß den ersten Steuerinformationen durch die Steuereinheit;
Speichern der ersten Steuerinformationen durch eine Speichereinheit für eine vorbestimmte Zeitdauer nach einem Start der ersten Steuerung gemäß den ersten Steuerinformationen; und
(i) nach einem Start der ersten Steuerung gemäß den ersten Steuerinformationen, wenn zweite Steuerinformationen von einer zweiten Bedienvorrichtung empfangen werden, deren Priorität niedriger ist als die der ersten Bedienvorrichtung, innerhalb einer vorbestimmten Zeitdauer, für die die erste Steuerinformationen in einer Speichereinheit gespeichert sind, Nicht-Steuern des In-Haus-gerätes gemäß den zweiten Steuerinformationen, und
(ii) wenn die zweite Steuerinformationen von der zweiten Bedienvorrichtung nach der vorbestimmten Zeitperiode empfangen werden, Steuern des In-Haus-Gerätes gemäß den zweiten Steuerinformationen.

## Revendications

1. Dispositif de commande d'appareil (15) pour commander un appareil domestique (18, 19), comprenant:
une unité de commande (151) conçue pour recevoir une première information de commande provenant d'un premier dispositif d'exploitation (12, 13, 16, 17) et pour commander l'appareil domestique (18, 19) en fonction de la première information de commande; et
une unité de stockage (152) conçue pour stocker la première information de commande pendant une période de temps prédéterminée après un début de première commande selon la première information de commande, dans lequel
(i) lorsque l'unité de commande (151) est conçue pour en outre une deuxième information de commande provenant d'un deuxième dispositif d'exploitation (12, 13, 16, 17) d'une priorité inférieure à celle du premier dispositif d'exploitation (12, 13, 16, 17) dans la période de temps prédéterminée pour laquelle la première information de commande est stockée dans l'unité de stockage (152), l'unité de commande (151) est en outre conçue pour ne pas commander l'appareil domestique (18, 19) en fonction de la deuxième information de commande, et
(ii) lorsque l'unité de commande (151) est conçue pour recevoir en outre la deuxième information de commande provenant du deuxième dispositif d'exploitation (12, 13, 16, 17) après la période de temps prédéterminée, l'unité de commande (151) est en outre conçue pour commander l'appareil domestique (18, 19) en fonction de la deuxième information de commande.

2. Dispositif de commande d'appareil (15) selon la revendication 1, dans lequel la période de temps prédéterminée est différente d'une période de temps jusqu'au terme de la première commande.

3. Dispositif de commande d'appareil (15) selon les revendications 1 ou 2, dans lequel (i) lorsque l'unité de commande (151) est conçue pour recevoir en outre la deuxième information de commande provenant d'un deuxième dispositif d'exploitation (12, 13, 16, 17) avant le terme de la première commande dans la période de temps prédéterminée, l'unité de commande (151) est en outre conçue pour continuer la première commande, et (ii) lorsque l'unité de commande (151) est conçue pour recevoir en outre la deuxième information de commande provenant du deuxième dispositif d'exploitation (12, 13, 16, 17) avant le terme de la première commande dans la période de temps prédéterminée, l'unité de commande (151) est en outre conçue pour arrêter la première commande.

4. Dispositif de commande d'appareil (15) selon l'une quelconque des revendications 1 à 3, dans lequel, lorsque l'unité de commande (151) est conçue pour recevoir en outre une troisième information de commande provenant d'un troisième dispositif d'exploitation (12, 13, 16, 17) de priorité supérieure à celle du premier dispositif d'exploitation (12, 13, 16, 17) dans la période de temps prédéterminée, l'unité de commande (151) est en outre conçue pour commande l'appareil domestique selon la troisième information de commande.

5. Dispositif de commande d'appareil (15) selon l'une quelconque des revendications 1 à 4, dans lequel , lorsque l'unité de commande (151) est conçue pour recevoir en outre une quatrième information de commande provenant d'un quatrième dispositif d'exploitation (12, 13, 16, 17) de priorité égale à celle du premier dispositif d'exploitation (12, 13, 16, 17) dans la période de temps prédéterminée, l'unité de commande (151) est en outre conçue pour commander l'appareil domestique selon la quatrième information de commande.

6. Dispositif de commande d'appareil (15) selon l'une quelconque des revendications 1 à 4, dans lequel , lorsque l'unité de commande (151) est conçue pour recevoir en outre une quatrième information de commande provenant d'un quatrième dispositif d'exploitation (12, 13, 16, 17) de priorité égale à celle du premier dispositif d'exploitation (12, 13, 16, 17) dans la période de temps prédéterminée, l'unité de commande (151) est en outre conçue pour ne pas commander l'appareil domestique selon la quatrième information de commande, et lorsque l'unité de commande (151) est conçue pour recevoir en outre la quatrième information de commande provenant du quatrième dispositif d'exploitation (12, 13, 16, 17) après le terme de la période de temps prédéterminée, l'unité de commande (151) est en outre conçue pour commander l'appareil domestique selon la quatrième information de commande.

7. Dispositif de commande d'appareil (15) selon l'une quelconque des revendications 1 à 6, dans lequel, lorsque l'unité de commande (151) est conçue pour recevoir en outre une cinquième information de commande provenant du premier dispositif d'exploitation (12, 13, 16, 17) dans la période de temps prédéterminée, l'unité de commande (151) est en outre conçue pour commander l'appareil domestique selon la cinquième information de commande.

8. Dispositif de commande d'appareil (15) selon l'une quelconque des revendications 1 à 7, dans lequel l'unité de commande (151) est en outre conçue pour identifier un dispositif de commande qui est différent du premier dispositif d'exploitation (12, 13, 16, 17) et constitue un dispositif de commande non domestique, en tant que deuxième dispositif de commande (12, 13, 16, 17) de priorité inférieure à celle du premier dispositif d'exploitation.

9. Dispositif de commande d'appareil (15) selon l'une quelconque des revendications 1 à 8, dans lequel, lorsque le premier dispositif d'exploitation (12,13, 16, 17) est un dispositif d'exploitation domestique (151) est en outre conçu pour identifier un autre dispositif d'exploitation domestique qui est un dispositif d'exploitation d'une priorité prédéterminée inférieure à celle d'une priorité prédéterminée du premier dispositif d'exploitation (12, 13, 16, 17) en tant que deuxième dispositif d'exploitation (12, 13, 16, 17) de priorité inférieure à celle du premier dispositif d'exploitation (12, 13, 16, 17).

10. Dispositif de commande d'appareil (15) selon la revendication 4, dans lequel le premier dispositif d'exploitation (12, 13, 16, 17) est un dispositif de commande non domestique, l'unité de commande (151) est en outre conçue pour identifier un dispositif d'exploitation domestique comme le troisième dispositif d'exploitation de priorité supérieure à celle du premier dispositif d'exploitation (12, 13, 16, 17).

11. Dispositif de commande d'appareil (15) selon les revendications 4 ou 10, dans lequel, lorsque le premier dispositif d'exploitation (12,13, 16, 17) est un dispositif d'exploitation domestique (151), l'unité de commande (151) est en outre conçue pour identifier un dispositif d'exploitation domestique différent qui est un dispositif d'exploitation d'une priorité prédéterminée supérieure à celle d'une priorité prédéterminée du premier dispositif d'exploitation (12, 13, 16, 17) en tant que troisième dispositif d'exploitation de priorité supérieure à celle du premier dispositif d'exploitation (12, 13, 16, 17).

12. Dispositif de commande d'appareil (15) selon l'une quelconque des revendications 1 à 11, dans lequel, lorsque l'unité de commande (151) est conçue pour recevoir en outre une sixième information de commande pour commander un appareil domestique différent du deuxième dispositif d'exploitation (12, 13, 16, 17) dans la période de temps prédéterminée, l'unité de commande (151) est en outre conçue pour commander l'appareil différent selon la sixième information de commande.

13. Procédé de commande d'appareil permettant de commander un appareil domestique, le procédé comprenant les étapes consistant à:
recevoir, par une unité de commande, une première information de commande provenant d'un premier dispositif de commande et commander, par l'unité de commande, l'appareil domestique conformément à la première information de commande;
stockage, par une unité de stockage, de la première information de commande pendant une période de temps prédéterminée après un début de la première commande selon la première information de commande; et
(i) après un début de la première commande selon la première information de commande, lors de la réception d'une deuxième information de commande provenant d'un second dispositif d'exploitation de priorité inférieure à celle du premier dispositif d'exploitation dans une période de temps prédéterminée pour laquelle la première information de commande est stockée dans une unité de stockage, ne commandant pas l'appareil domestique selon la deuxième information de commande, et
(ii) lors de la réception de la deuxième information de commande provenant du deuxième dispositif d'exploitation après la période de temps prédéterminée, commander l'appareil domestique selon la deuxième information de commande.
